# EUROPEAN PATENT APPLICATION

(11) **EP 4 596 955 A1**
(43) Date of publication of application: **06.08.2025**
(21) Application number: 23872136.9
(22) Date of filing: 22.09.2023
(51) Int. Cl.: F21S 2/00, F21V 3/00, F21V 3/06, F21V 3/10, F21V 8/00, G02B 5/00, G02B 6/00, F21Y 115/10

(54) **OPTICAL MEMBER AND ILLUMINATION DEVICE**

(30) Priority: 29.09.2022 JP 2022155971
(71) Applicant: Nitto Denko Corporation, Ibaraki-shi, Osaka 567-8680 (JP)
(72) Inventor: WATANABE, Taichi, Ibaraki-shi, Osaka 567-8680 (JP); NAKAMURA, Kozo, Ibaraki-shi, Osaka 567-8680 (JP)
(74) Representative: Hoffmann Eitle
(86) International application number: PCT/JP2023/034396
(87) International publication number: WO 2024/070910

(57) **Abstract**

An optical member **(100)** comprises a light guide member **(110)** and at least one cover member **(200F), (200R),** and is configured so as to emit light towards the front surface side. The light guide member comprises: a light guide layer **(10)** having a light-receiving side surface that receives light emitted from a light source **(LS);** and a light distribution control structure **(14A)** that can guide at least a portion of the light propagated inside the light guide layer towards the front surface side. The at least one cover member includes: a first cover member **(200F)** disposed on the front surface side of the light guide member; or a second cover member **(200R)** disposed on the rear surface side opposite to the front surface side of the light guide member. The optical member is configured such that over 50% of the light that has entered the light guide layer is emitted from the front surface side of the light guide member.

## Description

### TECHNICAL FIELD

The present invention relates to an optical member including a light guide layer, and an illumination device including a light source and such an optical member.

### BACKGROUND ART

Today, various types of illumination devices using LED elements as light sources are developed. One of such illumination devices is a sheet-like (encompassing plate-like and film-like) illumination device including a light source and a light guide layer.

For example, Patent Document No. 1 discloses an illumination device including a light guide plate installed on a skylight and capable of transmitting sunlight.

Patent Document No. 2 discloses an illumination device including a light guide layer disposed between two cover members. The two cover members are different in the reflectance, so that the output efficiency of light to one side may be improved.

### CITATION LIST

### PATENT LITERATURE

Patent Document No. 1: Japanese Laid-Open Patent Publication No. 2012-49050
Patent Document No. 2: Japanese Laid-Open Patent Publication No. 2014-10919

### SUMMARY OF INVENTION

### TECHNICAL PROBLEM

However, the conventional sheet-like illumination devices each including a light source and a light guide layer have various problems and are limited in the application of use.

For example, the illumination device described in Patent Document No. 1 is usable on a skylight, but cannot be installed easily on a window or a wall. In addition, this illumination device has problems, for example, that the utilization factor of light is low and/or that the illumination light is diffused light and thus is clouded (having a large Haze value) when being used for a window. The illumination device described in Patent Document No. 2 uses the reflection by the cover member, and therefore, has a problem that the utilization factor of light transmitted through the illumination device is lowered.

The present invention, made in light of the above-described problems, has an object of providing an illumination device usable for various applications including windows and walls, and an optical member usable for such an illumination device.

### SOLUTION TO PROBLEM

Embodiments of the present invention provide the solutions described in the following items.

### [Item 1]

An optical member, comprising a light guide member, and at least one cover member, the optical member being configured to output light forward,
wherein the light guide member includes:
   a light guide layer having a light receiving surface at which the light output from a light source is received, and
   a luminous intensity distribution control structure capable of directing, at least forward, a portion of the light propagated in the light guide layer,
wherein the at least one cover member includes a first cover member disposed forward of the light guide member or a second cover member disposed opposite thereto, that is rearward of the light guide member, and
more than 50% of the light incident on the light guide layer is output forward from the light guide member.

### [Item 2]

The optical member of item 1, wherein the first cover member and the second cover member each have a reflectance of 25% or lower for visible light incident perpendicularly thereon from the side of the light guide layer.

### [Item 3]

The optical member of item 1 or 2, wherein the first cover member or the second cover member includes a glass plate.

### [Item 4]

The optical member of item 3, wherein the first cover member further includes a reflection-preventive layer provided on at least one main surface of the glass plate.

### [Item 5]

The optical member of any one of items 1 through 4, wherein where a light beam having a highest luminous intensity in a luminous intensity distribution of light output forward from the light guide member is a first main light beam and a light beam having a highest luminous intensity in a luminous intensity distribution of light output rearward from the light guide member is a second main light beam, a polar angle **θ1** of the first main light beam with respect to the normal to the light guide layer is smaller than a polar angle **θ2** of the second main light beam with respect to the normal to the light guide layer.

### [Item 6]

The optical member of item 5, wherein where the polar angle **θ1** is 0° or larger and smaller than 40°, and the polar angle **θ2** is 30° or larger and smaller than 70°.

### [Item 7]

The optical member of any of items 1 through 6, wherein the light guide member and the at least one cover member are disposed to be away from each while having a gas layer therebetween.

### [Item 8]

The optical member of any of items 1 through 7, wherein the light guide layer is formed of an acrylic resin.

### [Item 9]

The optical member of any of items 1 through 8, wherein the luminous intensity distribution control structure includes a plurality of internal spaces each having a forward inclining surface directing light forward by total internal reflection.

### [Item 10]

The optical member of any of items 1 through 9, wherein the luminous intensity distribution control structure is formed in a direction conversion layer disposed forward or rearward of the light guide layer.

### [Item 11]

The optical member of any of items 1 through 10, wherein the light guide member has a visible light transmittance of 60% or higher and a Haze value of smaller than 10%.

### [Item 12]

An illumination device, comprising:
the optical member of any of items 1 through 11; and
a light source disposed so as to output light toward the light receiving surface of the optical member.

### ADVANTAGEOUS EFFECTS OF INVENTION

Embodiments of the present invention provide an illumination device usable for various applications including windows and walls, and an optical member usable for such an illumination device.

### BRIEF DESCRIPTION OF DRAWINGS

FIG. **1** is a schematic cross-sectional view of an illumination device **1000** according to an embodiment of the present invention.
FIG. **2** is a schematic plan view of a light guide member **110** included in the illumination device **1000.**
FIG. **3A** is a schematic cross-sectional view of an internal space **14A** that may be included in the light guide member **110.**
FIG. **3B** is a schematic plan view of the internal space **14A.**
FIG. **3C** is a schematic plan view showing a variation of the internal space **14A.**
FIG. **4** is a schematic cross-sectional view of a light guide member **110A** included in an illumination device according to another embodiment of the present invention.
FIG. **5** is a schematic cross-sectional view of a light guide member **110B** included in an illumination device according to still another embodiment of the present invention.
FIG. **6** is a schematic partial perspective view of an optical member **300A** according to an embodiment of the present invention.
FIG. **7** is a schematic partial perspective view of an optical member **300B** according to an embodiment of the present invention.

### DESCRIPTION OF EMBODIMENTS

Hereinafter, optical members and illumination devices according to embodiments of the present invention will be described with reference to the drawings. The optical members and the illumination devices according to embodiments of the present invention are not limited those described below.

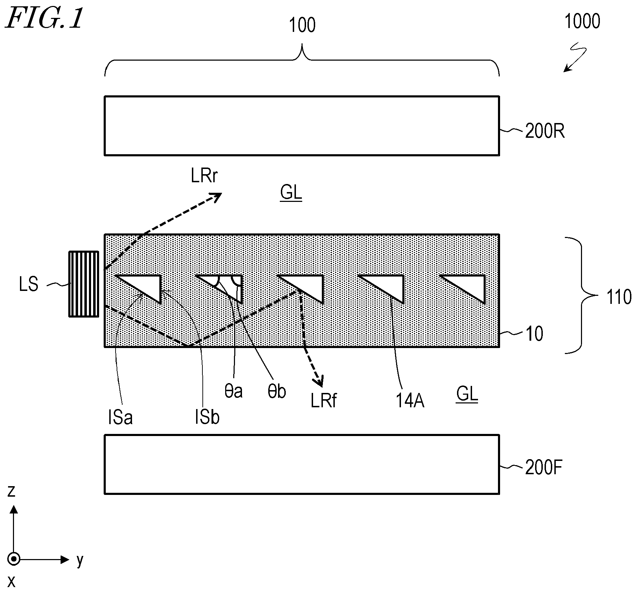

FIG. **1** is a schematic cross-sectional view of an illumination device **1000** according to an embodiment of the present invention. In the figure, dashed arrows represent examples of light beams.

The illumination device **1000** includes a light source **LS** and an optical member **100.** The optical member **100** includes a light guide member **110,** a first cover member **200F,** and a second cover member **200R,** and is configured to output light forward (in FIG. **1****,** in a -Z direction).

The light guide member **110** includes a light guide layer **10** having a light receiving surface at which the light output from the light source **LS** is received, and a luminous intensity distribution control structure capable of directing, at least forward, a portion of the light propagated in the light guide layer **10** (y direction). The luminous intensity distribution control structure provided herein as an example includes a plurality of internal spaces **14A** each having a forward inclining surface **ISa** directing the light forward by total internal reflection (TIR). The "forward" of the "forward inclining surface" of each internal space refers to that the forward inclining surface, among inclining surfaces of the internal space, is on a light receiving side (closer to the light receiving surface). Among the inclining surfaces of each internal space, an inclining surface disposed opposite to the light receiving surface (farther from the light receiving surface) will be referred to as a "rearward inclining surface").

The light guide member **110** includes the luminous intensity distribution control structure in the light guide layer **10.** The present invention is not limited to this. As described below as an example, the light guide member may further include a direction conversion layer (may also be referred to as a "light retrieval layer"), and the direction conversion layer may include the luminous intensity distribution control structure. The light guide member **110** is configured such that more than 50% of the light incident on the light guide layer **10** is output forward from the light guide member **110.**

The optical member **100** includes a first cover member **200F** disposed forward of the light guide member **110** and a second cover member **200R** disposed opposite thereto, that is, rearward of the light guide member **110.** One of the first cover member **200F** and the second cover member **200R** may be omitted. The first cover member **200F** or the second cover member **200R** may be disposed on the side where the light guide member **110** is to be protected, in accordance with the environment in which the illumination device **1000** is used.

The first cover member **200F** and the second cover member **200R** are disposed to be away from each other while having the light guide member **110** and a gas layer **GL** therebetween. The gas layer **GL** may be, for example, an air layer. For example, a sealed space may be formed between the first cover member **200F** and the light guide member **110** and/or between the second cover member **200R** and the light guide member **110,** like in a multiple glazing glass plate having a high thermal insulation performance, and the glass layer **GL** may be formed of, for example, argon gas. In the case where such a multiple glazing glass plate is formed, a spacer including a desiccant may be further disposed so as to be in contact with the gas layer **GL.**

In the case where the gas layer **GL** is provided, the total reflection at an interface between the light guide member **110** and the gas layer **GL** may be used to propagate the light efficiently in the light guide member **110.** Instead of the gas layer **GL,** a low refractive index layer (e.g., having a refractive index of 1.30 or lower) may be provided. The light guide member **110** and the first cover member **200F** and/or the second cover member **200R** may be bonded together with, for example, a pressure-sensitive adhesive layer. In this case, it is preferred that no optical interface is formed between the light guide member **110,** the pressure-sensitive adhesive layer, the first cover member **200F** and/or the second cover member **200R.**

It is preferred that the first cover member **200F** and the second cover member **200R** each have a reflectance of 25% or lower for visible light incident thereon vertically from the side of the light guide member **110.** For example, Low-E glass may be used for the first cover member **200F** and/or the second cover member **200R.** The Low-E (low emissivity) glass includes a Low-E metal (e.g., silver) film (and a metal oxide film) on a surface of the glass plate. The Low-E metal is disposed on a surface of the glass plate that is closer to the light guide member **110.**

The first cover member **200F** and/or the second cover member **200R** may include a glass plate. The first cover member **200F** and/or the second cover member **200R** may include a plastic plate having a high visible light transmittance. As the plastic material, polymethylmethacrylate (PMMA), polycarbonate (PC), polyvinylchloride (PVC), or polyethyleneterephthalate (PET) is usable, for example. Note that a glass plate has properties of, for example, having a higher hardness and having a higher flame retardancy than those of a plastic plate. Therefore, it is preferred to use a glass plate as a component for construction. By contrast, for a window of a showcase or the like, it is preferred to use a plastic plate, which is lightweight. There is no limitation on the thickness of the glass plate or the plastic plate. The thickness of the glass plate or the plastic plate may be appropriately set in accordance with the use thereof, with no specific limitation. The thickness of the glass plate is, for example, 1 mm or greater and 15 mm or less. The thickness of the plastic plate is, for example, 1 mm or greater and 15 mm or less.

For a use for which thermal shielding performance or thermal insulation performance is required, the Low-E glass mentioned above is preferably used. It is preferred that the first cover member **200F** and the second cover member **200R** have a high visible light transmittance and a low visible light reflectance. The visible light reflectance of each of the first cover member **200F** and the second cover member **200R** is preferably 15% or lower, more preferably 10% or lower, still more preferably 5% or lower, and still more preferably 3% or lower. The first cover member **200F** and/or the second cover member **200R** having such a low visible light reflectance may be provided by provision of a reflection-preventive film on at least one main surface of a glass plate or a plastic plate. As the reflection-preventive film, any of various known reflection-preventive films may be used. For example, as described in experiment examples, low reflection film Leclear II produced by Sangetsu Corporation may be bonded to at least one main surface of a glass plate or a plastic plate. For example, a reflection-preventive film is provided on at least one of two main surfaces of the first cover member **200F,** which is disposed on the light output side.

As shown in FIG. **1****,** the illumination device **1000** outputs light **LRf** forward and outputs light **LRr** rearward. The luminous intensity distribution of the light output forward and the luminous intensity distribution of the light output rearward are different from each other. The luminous intensity distribution may be controlled by, for example, adjustment on an inclination angle **θa** of a forward inclining surface **ISa** and/or an inclination angle **θb** of a rearward inclining surface **ISb.**

The "luminous intensity distribution" of an illumination device refers to the distribution of the luminous intensity (strength) with respect to the angle, and does not depend on the wavelength of the light output from the illumination device. The luminous intensity distribution of an illumination device is measured by a method conformed to, for example, JIS C8105-5. The luminous intensity distribution is characterized by, for example, a direction of a light beam having the highest luminous intensity (intensity) (hereinafter, referred to as the "main light beam").

Where the light beam having the highest strength in the luminous intensity distribution of the light output forward from the light guide member **110** is a first main light beam and the light beam having the highest strength in the luminous intensity distribution of the light output rearward from the light guide member **110** is a second main light beam, a polar angle **θ1** of the first main light beam with respect to the normal to the light guide layer **10** is smaller than a polar angle **θ2** of the second main light beam with respect to the normal to the light guide layer **10.** For example, the polar angle **θ1** is 0° or larger and smaller than 40°, and the polar angle **θ2** is 30° or larger and smaller than 70° (see, for example, Japanese Patent Application No. 2021-096846). The entirety of the disclosure of Japanese Patent Application No. 2021-096846 is incorporated therein by reference. The light guide member **110** has such a luminous intensity distribution, so that the illumination device **1000** may output a larger amount of light forward than rearward. That is, the light guide member **110** is configured such that more than 50% of the light incident on the light guide layer **10** is output forward from the light guide member **110.** The illumination device **1000** is capable of outputting light having a high directivity forward.

The light guide member **110** has a visible light transmittance of, for example, 60% or higher. The light guide member **110** has a Haze value of, for example, smaller than 10%. The visible light transmittance of the light guide member **110** is preferably 70% or higher, and more preferably 80% or higher. The Haze value of the light guide member **110** is preferably 5% or smaller. Herein, the visible light is defined as light having a wavelength of 380 nm or longer and 780 nm or shorter. The visible light transmittance and the Haze value may be measured by use of, for example, a Haze meter (trade name: HM-150; produced by Murakami Color Research Laboratory Co., Ltd.).

The light source **LS** is, for example, an LED device. An array of a plurality of LED devices may be used as the light source **LS.** Alternatively, a coupling optical system may be provided between the light source **LS** and the light guide layer **10** to guide the light output from the light source **LS** to the light guide layer **10** efficiently.

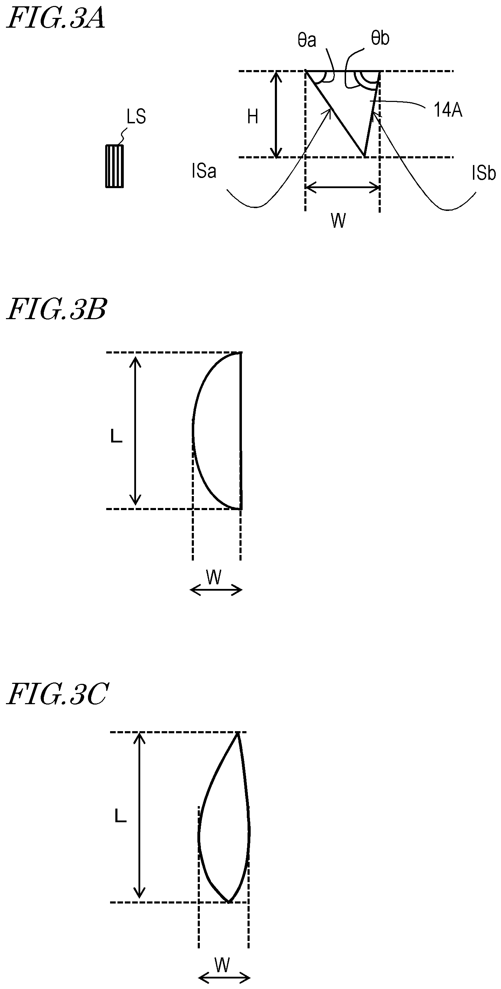

The luminous intensity distribution may be controlled by, for example, adjustment on the cross-sectional shape, the planar shape, the size, the density in the light guide layer **10,** and the distribution of the internal spaces **14A.** As described below with reference to FIG. **3A**, the inclination angle **θa** of the forward inclining surface **ISa** is, for example, 10° or larger and 70° or smaller. The inclination angle **θb** of the rearward inclining surface **ISb** is, for example, 50° or larger and 100° or smaller. Herein, the cross-sectional shape of the internal spaces **14A** is triangular. The present invention is not limited to this, and the cross-sectional shapes of the internal spaces **14A** may be independent from each other and may be trapezoidal or the like.

Regarding the plurality of internal spaces **14A,** which are provided as the luminous intensity distribution control structure, as seen in the direction of the normal to a main surface of the light guide layer **10,** the ratio of the area size of the plurality of internal spaces **14A** with respect to the area size of the light guide layer **10** (occupancy area ratio) is preferably 1% or higher and 80% or lower. The upper limit of the occupancy area ratio is preferably 50%, and more preferably 45%. In order to provide a high transmittance and/or a low Haze value, the upper limit of the occupancy area ratio is preferably 30%, more preferably 10%, and still more preferably 5%. When, for example, the occupancy area ratio of the internal spaces is 50%, a Haze of 30% may be provided. The occupancy area ratio of the internal spaces **14A** may be uniform, or may be increased as the distance from the light source **LS** is increased such that the luminance is not decreased even as the distance from the light source **LS** is increased. In order to mass-produce the luminous intensity distribution control structure by a roll-to-roll method or a roll-to-sheet method, it is preferred that the occupancy area ratio of the internal spaces **14A** is uniform.

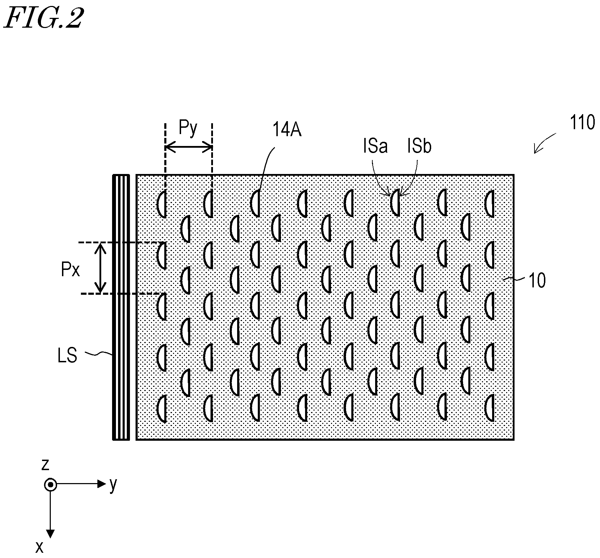

Now, with reference to FIG. **2****,** an example of planar shape and positional arrangement of the internal spaces **14A** will be described. FIG. **2** is a schematic plan view of the light guide member **110.** With reference to FIG. **3A,** FIG. **3B** and FIG. **3C****,** the shape of the internal spaces **14A** will be described. FIG. **3A** is a schematic cross-sectional view of the internal space **14A.** FIG. **3B** is a schematic plan view of the internal space **14A.** FIG. **3C** is a schematic plan view showing a variation of the internal space **14A.**

As shown in FIG. **2****,** the plurality of internal spaces **14A** are discretely arranged in, for example, a light guide direction of the light guide layer **10** (in a y direction) and in a direction perpendicular to the light guide direction (in an x direction). Regarding the size (length **L** and width **W;** see FIG. **3A** and FIG. **3B****)** of the internal space **14A,** the length **L** is preferably 10 µm or longer and 500 µm or shorter, and the width **W** is preferably 1 µm or longer and 100 µm or shorter, for example. From the point of view of the light retrieval efficiency, the height **H** (see FIG. **3A****)** is preferably 1 µm or longer and 100 µm or shorter.

Herein, an example in which the plurality of internal spaces **14A** are discretely arranged in the light guide direction of the light guide layer **10** (in the y direction) and in the direction perpendicular to the light guide direction (in the x direction) is described. The present invention is not limited to this, and the plurality of internal spaces **14A** may be discretely arranged in the light guide direction of the light guide layer **10** (in the y direction) and a direction crossing the light guide direction. The discrete positional arrangement of the internal spaces **14A** may be appropriately set in accordance with the shape of the light guide layer **10,** the required luminous intensity distribution, or the like. In the light guide layer **10,** the light is propagated in various directions. The y direction will be referred to as the "light guide direction", and light having a component of the y direction (not zero) will be expressed as "being propagated in the y direction". The same is applicable to the other directions. That is, light propagated in a -y direction encompasses all the light having a component of the -y direction (not zero).

The plurality of internal spaces **14A** are discretely arranged in, for example, the light guide direction and a direction crossing the light guide direction. The discrete positional arrangement may be periodical (regular) in at least one direction, or may not be periodical. Note that it is preferred that the plurality of internal spaces **14A** are arranged uniformly from the point of view of the mass-productivity. For instance, in the example shown in FIG. **2****,** the plurality of internal spaces **14A** having substantially the same shape and having curved surfaces protruding in substantially the same direction are arranged in the light guide direction of the light guide layer **10** (in the y direction) and in the direction perpendicular to the light guide direction (in the x direction), discretely and periodically in the entirety of the region. In this case, a pitch **Px** is preferably, for example, 10 µm or longer and 500 µm or shorter, and a pitch **Py** is preferably, for example, 10 µm or longer and 500 µm or shorter. In the example shown in FIG. **2****,** there are also internal spaces shifted from the above-described internal spaces **14A** by a 1/2 pitch in each of the y direction and the x direction.

As shown in FIG. **2****,** as seen from the direction of the normal to the main surface of the light guide layer **10,** the forward inclining surfaces **ISa** each form a curve protruding toward the light source **LS.** The light source **LS** includes, for example, an LED device. A plurality of LEDs are arranged in the x direction. Light that is output from each of the plurality of LEDs expands with respect to the y direction. Therefore, each of the forward inclining surfaces **ISa,** in the case of having a curve protruding toward the light source **LS,** acts uniformly on the light. In the case where a coupling optical system is provided between the light source **LS** and the light receiving surface of the light guide member **110** to cause light having a high degree of parallelism (light not largely expanding with respect to the y direction) to be incident, the forward inclining surfaces **ISa** may be parallel to the x direction. Instead of the internal spaces **14A** discretely arranged, internal spaces like grooves extending in the x direction (e.g., triangular prisms) may be provided, for example.

As shown in FIG. **3A**, the internal spaces **14A** each have, for example, a triangular cross-section. The inclination angle **θa** of the forward inclining surface **ISa,** which is closer to the light source **LS,** is, for example, 10° is larger and 70° or smaller. In the case where the inclination angle **θa** is smaller than 10°, the controllability on the luminous intensity distribution is decreased, and also the light retrieval efficiency may possibly be decreased. By contrast, in the case where the inclination angle **θa** exceeds 70°, the production of the luminous intensity distribution control structure may possibly be difficult, for example. The inclination angle θb of the rearward inclining surface **ISb** is, for example, 50° or larger and 100° or smaller. In the case where the inclination angle **θb** is smaller than 50°, stray light may possibly be generated in a direction not intended. By contrast, in the case where the inclination angle **θb** exceeds 100°, the production of the luminous intensity distribution control structure may possibly be difficult, for example. As shown in FIG. **3B** and FIG. **3C****,** the length **L** of each internal space **14A** is preferably 10 µm or longer and 500 µm or shorter, and the width **W** of each internal space **14A** is preferably 1 µm or longer and 100 µm or shorter. The length **L** is, for example, at least twice the width **W.** The height **H** (see FIG. **3A****)** is preferably 1 µm or longer and 100 µm or shorter. A recessed portion having a planar shape shown in FIG. **3B** is to be formed, but in the case where the formation of the recessed portion is performed at a certain processing precision, a recessed portion having a planar shape shown in FIG. **3C** may possibly be formed. Even in such a case, the planar shape of the internal space may be characterized by the length **L** and the width **W.** The shape of the curve, protruding toward the light source **LS,** of the forward inclining surface **ISa,** as seen from the direction of the normal to the main surface of the light guide layer **10,** may be represented by, for example, a biquadratic curve. The internal spaces **14A** may be formed of, for example, a shape-forming film having recessed portions at a surface thereof and an adhesive layer, as described below.

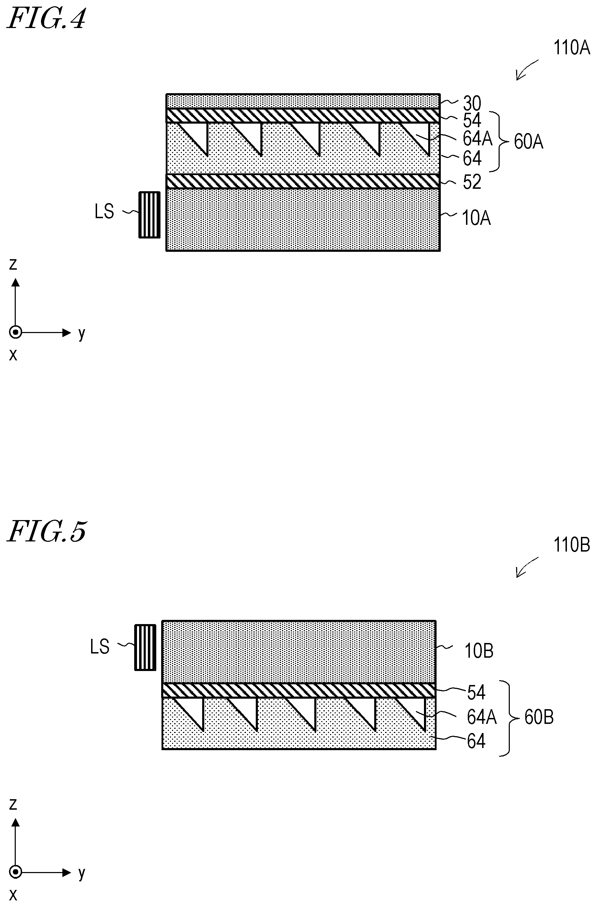

Now, with reference to FIG. **4** and FIG. **5****,** illumination devices according to other embodiments of the present invention will be described. In each of the illumination devices described below as examples, the luminous intensity distribution control structure is formed in a direction conversion layer disposed forward or rearward of the light guide layer.

FIG. **4** is a schematic cross-sectional view of a light guide member **110A** included in an illumination device according to another embodiment of the present invention. FIG. **4** also shows the light source **LS.**

The light guide member **110A** includes a light guide layer **10A** having a light receiving surface at which light output from the light source **LS** is received, and a direction conversion layer **60A** disposed rearward of the light guide layer **10A** with an adhesive layer **52** being disposed between the direction conversion layer **60A** and the light guide layer **10A.** The direction conversion layer **60A** includes a luminous intensity distribution control structure capable of directing, at least forward, a portion of light propagated in the light guide layer **10A** (y direction). The luminous intensity distribution control structure provided herein as an example includes a plurality of internal spaces **64A** each having a forward inclining surface directing the light forward by total internal reflection. The direction conversion layer **60A** including the plurality of internal spaces **64A** includes a shape-forming film **64,** having recessed portions **64A** (represented by the same reference sign as that of the internal spaces **64A)** at a surface thereof, and an adhesive layer **54.** The adhesive layer **54** bonds the shape-forming film **64** and a substrate layer **30** to each other.

FIG. **5** is a schematic cross-sectional view of a light guide member **110B** included in an illumination device according to still another embodiment of the present invention. FIG. **5** also shows the light source **LS.**

The light guide member **110B** includes a light guide layer **10B** having a light receiving surface at which light output from the light source **LS** is received, and a direction conversion layer **60B** disposed forward of the light guide layer **10B.** The direction conversion layer **60B** includes a luminous intensity distribution control structure capable of directing, at least forward, a portion of light propagated in the light guide layer **10B** (y direction). The luminous intensity distribution control structure provided herein as an example includes a plurality of internal spaces **64A** each having a forward inclining surface directing the light forward by total internal reflection. The direction conversion layer **60B** including the plurality of internal spaces **64A** includes a shape-forming film **64,** having recessed portions **64A** (represented by the same reference sign as that of the internal spaces **64A)** at a surface thereof, and an adhesive layer **54.** The adhesive layer **54** bonds the shape-forming film **64** and the light guide layer **10B** to each other.

A shape-forming film used to form the internal spaces may be produced as follows, for example. A concaved and convexed shape-forming film was produced in accordance with the method described in PCT Japanese National-Phase Laid-Open Publication No. 2013-524288. Specifically, a surface of a polymethylmethacrylate (PMMA) film was coated with lacquer (Finecure RM-64 produced by Sanyo Chemical Industries, Ltd.), an optical pattern was embossed on the surface of the film including the lacquer, and then the lacquer was cured. In this manner, an intended concaved and convexed shape-forming film was produced. The shape-forming film has a total thickness of 130 µm.

The light guide layer is formed of a known material having a high visible light transmittance. The light guide layer is formed of, for example, an acrylic resin such as polymethylmethacrylate (PMMA) or the like, a polycarbonate(PC)-based resin, a cycloolefin-based resin, or glass (e.g., quartz glass, alkali-free glass, or borosilicate glass). The light guide layer has a refractive index **n_{GP}** of, for example, 1.40 or higher and 1.80 or lower. The "refractive index" refers to a refractive index measured by an ellipsometer at a wavelength of 550 nm, unless otherwise specified. The light guide layer has a thickness that may be appropriately set in accordance with the use thereof. The thickness of the light guide layer is, for example, 0.05 mm or greater and 50 mm or less.

The substrate layer is also used for the light guide layer. The substrate layer is formed of a plastic material having a high visible light transmittance, for example, an acrylic resin such as polymethylmethacrylate (PMMA) or the like, a polycarbonate(PC)-based resin or a cycloolefin-based resin. The substrate layer has a thickness of, for example, 1 µm or greater and 1000 µm or less, preferably 10 µm or greater and 100 µm or less, and more preferably 20 µm or greater and 80 µm or less. The substrate layers each independently have a refractive index of, preferably independently 1.40 or higher and 1.70 or lower, and more preferably independently 1.43 or higher and 1.65 or lower.

The adhesive layers each independently have a thickness of, for example, 0.1 µm or greater and 100 µm or less, preferably 0.3 µm or greater and 100 µm or less, and is more preferably 0.5 µm or greater and 50 µm or less. The adhesive layers each independently have a refractive index of, preferably 1.42 or higher and 1.60 or lower, and more preferably 1.47 or higher and 1.58 or lower. The refractive index of each of the adhesive layers is preferably close to the refractive index of the light guide layer, the shape-forming film or the substrate layer that is in contact with the adhesive layer. It is preferred that an absolute value of the difference in such refractive indices is 0.2 or smaller.

It is preferred that the adhesive layer that is in contact with the recessed portions at the surface of the shape-forming film and defines the internal spaces adheres to the surface of the shape-forming film without burying the recessed portions. As an adhesive preferred to form such an adhesive layer, any of the adhesives described in WO2021/167090, WO2021/167091 and WO2022/176658, which are all filed by the present Applicant, are preferably usable. The entirety of the disclosures of these applications are incorporated therein by reference. The polyester-based adhesive described in WO2022/176658 is especially preferred.

In the case where a glass plate is used as the light guide layer **10A** of the light guide member **110A,** it is merely needed to dispose the second cover member **200R** rearward of the light guide member **110A** in order to provide an optical member superb in the hardness (strength) and the flame retardancy. In the case where a glass plate is used as the light guide layer **10B** of the light guide member **110B,** it is merely needed to dispose the first cover member **200F** forward of the light guide member **110B** in order to provide an optical member superb in the hardness (strength) and the flame retardancy. In either case, the first cover member **200F** may be disposed forward of the light guide member **110A** or **110B** and also the second cover member **200R** may be disposed rearward of the light guide member **110A** or **110B,** needless to say. For a use where at least one of the hardness (strength) and the flame retardancy is not required, the light guide layer **10A** or **10B** may be formed of a plastic material. In the case where the light guide layer **10A** or **10B** is formed of a plastic material, it is preferred to use an acrylic resin, which has an especially high visible light transmittance.

Optical members having various configurations were produced experimentally by use of a light guide member having the same configuration as that of the light guide member **100A** shown in **FIG. 4** (examples 1 through 12, and the comparative example). As each of the first cover member **200F** and the second cover member **200R,** an acrylic (PMMA) plate or a glass plate was used. An optical member including a reflection-preventive film (AR) provided forward of (outer to) the first cover member **200F** and an optical member including a reflection-preventive film (AR) provided forward of (inner to) the second cover member **200R** were produced. As the reflection-preventive film, Leclear II produced by Sangetsu Corporation was used. An optical member including neither the first cover member **200F** nor the second cover member **200R** was produced as the comparative example.

As the light guide member **110A,** a light guide member having the parameters shown in Table 1 below was used. As the light guide layer **10,** an acrylic plate having a thickness of 5 mm was used. As the substrate layer **30,** an acrylic film having a thickness of 30 µm was used. The thickness of the shape-form ing film **64** was 40 µm. As each of the adhesive layers **52** and **54,** an acrylic pressure-sensitive adhesive having a thickness of 50 µm was used. The visible light transmittance of the light guide member was 93%, and the Haze value thereof was 3%. The visible light transmittance and the Haze value were measured by use of, for example, a Haze meter (trade name: HM-150; produced by Murakami Color Research Laboratory Co., Ltd.).

**[Table 1]**

| Px (µm) | Py (µm) | W (µm) | L (µm) | H (µm) | θa (°) | θb (°) | OCCUPANCY AREA RATIO (%) |
|---|---|---|---|---|---|---|---|
| 120 | 140 | 14.55 | 61 | 8 | 30 | 85 | 6.96 |

Table 2 below shows the configurations and the properties of the optical members produced experimentally, The reflectance of the surface of the first cover member **200F** (front (outer) surface) and the reflectance of the surface of the second cover member **200R** (front (inner) surface) were measured by the UV-Vis-NIR spectrophotometer UH4150 with a halogen lamp being used as the light source. As the appearance, the transmittance of the optical member was evaluated by visual inspection. A target such as experiment equipment or the like was visually observed through each of the optical members. An optical member through which the target was seen very clearly with very little glare was evaluated as "very good" (⊚), an optical member through which the target was seen clearly with little glare was evaluated as "good" (○), and an optical member through which the target was seen with slight glare was evaluated as "acceptable" (△). The optical members in the examples each include at least the first cover member **200F** or the second cover member **200R,** and therefore, are sufficient (○) in the surface protection of the light guide members thereof. The optical members including both of the first cover member **200F** and the second cover member **200R** are particularly excellent (⊚) in the surface protection of the light guide members thereof. The optical member in the comparative example includes neither the first cover member **200F** nor the second cover member **200R,** and therefore, is not capable of protecting the surface of the light guide member thereof (×). Regarding the flame retardancy for the use in construction, an optical member in which either one of the first cover member **200F** and the second cover member **200R** included a glass plate was evaluated as good (○), and an optical member in which both of the first cover member **200F** and the second cover member **200R** included a glass plate was evaluated as very good (⊚).

**[Table 2]**

| | 1ST COVER MEMBER 200F | 2ND COVER MEMBER 200R | 1ST COVER MEMBER SURFACE REFLECTANCE | 2ND COVER MEMBER SURFACE REFLECTANCE | APPEARANCE (TRANSMITTANCE) | SURFACE PROTECTION OF LIGHT GUIDE MEMBER | FRAME RETARDANCY |
|---|---|---|---|---|---|---|---|
| EX. 1 | NONE | GLASS PLATE WITH AR | - | 0.9% | ⊚ | ○ | ○ |
| EX. 2 | GLASS PLATE WITH AR | NONE | 0.9% | - | ⊚ | ○ | ○ |
| EX. 3 | NONE | ACRYLIC PLATE WITH AR | - | 0.9% | ⊚ | ○ | × |
| EX. 4 | ACRYLIC PLATE WITH AR | NONE | 0.9% | - | ⊚ | ○ | × |
| EX. 5 | GLASS PLATE | GLASS PLATE WITH AR | 8.5% | 0.9% | ○ | ⊚ | ⊚ |
| EX. 6 | GLASS PLATE WITH AR | GLASS PLATE | 0.9% | 8.5% | ○ | ⊚ | ⊚ |
| EX. 7 | GLASS PLATE WITH AR | GLASS PLATE WITH AR | 0.9% | 0.9% | ⊚ | ⊚ | ⊚ |
| EX. 8 | ACRYLIC PLATE | ACRYLIC PLATE WITH AR | 7.5% | 0.9% | ○ | ⊚ | × |
| EX. 9 | ACRYLIC PLATE WITH AR | ACRYLIC PLATE | 0.9% | 7.5% | ○ | ⊚ | × |
| EX. 10 | ACRYLIC PLATE WITH AR | ACRYLIC PLATE WITH AR | 0.9% | 0.9% | ⊚ | ⊚ | × |
| EX. 11 | GLASS PLATE | GLASS PLATE | 8.5% | 8.5% | Δ | ⊚ | ⊚ |
| EX. 12 | ACRYLIC PLATE | ACRYLIC PLATE | 7.5% | 7.5% | Δ | ⊚ | × |
| COMPARATIVE EXAMPLE. | NONE | NONE | - | - | ⊚ | × | × |

As described above, the optical member according to an embodiment of the present invention includes a cover member protecting the light guide member and has a high visible light transmittance, and therefore, does not spoil the appearance.

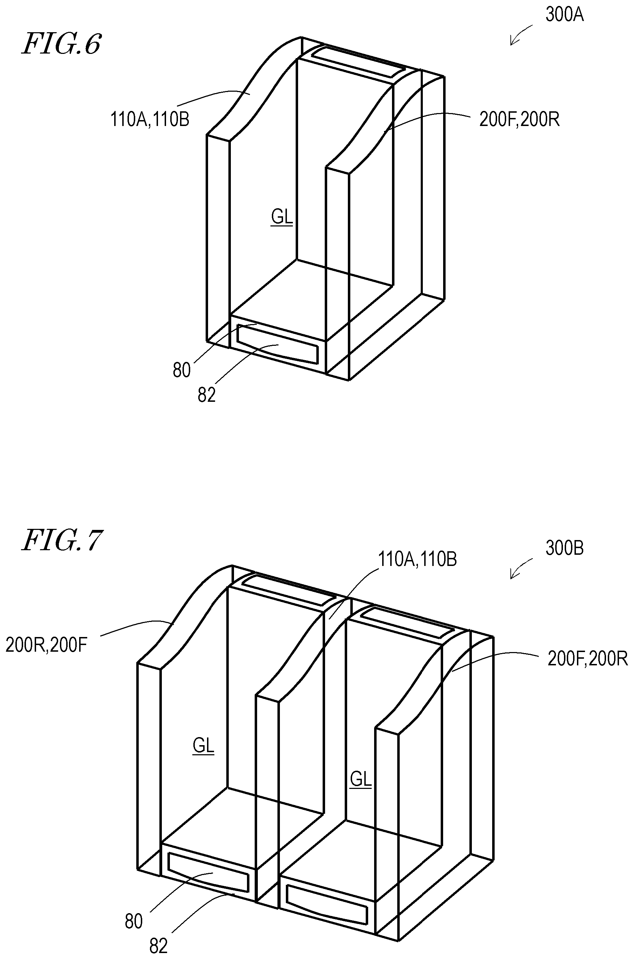

FIG. **6** is a schematic partial perspective view of an optical member **300A** according to an embodiment of the present invention. The optical member **300A** is, for example, a multiple glazing glass plate. The multiple glazing glass plate **300A** includes the light guide member **110A** or **110B** and the first cover member **200F** or the second cover member **200R.** The light guide member **110A or 110B** and the first cover member **200F** or the second cover member **200R** are secured to each other while being away from each other by a certain interval by a spacer **80,** and define a gas layer **GL** in the sealed space. The direction in which the light is output (i.e., the forward direction) may be selected in accordance with the orientation in which the light guide member **110A** or **110B** is disposed. The spacer **80** includes a desiccant therein and removes moisture from the gas of the gas layer **GL.**

FIG. **7** is a schematic partial perspective view of an optical member **300B** according to an embodiment of the present invention. The optical member **300B** is, for example, a multiple glazing glass plate. The multiple glazing glass plate **300B** includes the light guide member **110A** or **110B,** the first cover member **200F** and the second cover member **200R.** The direction in which the light is output (i.e., the forward direction) may be selected in accordance with the orientation in which the light guide member **110A** or **110B** is disposed. That is, the positions of the first cover member **200F** and the second cover member **200R** may be exchanged. The light guide member **110A** or **110B** and each of the first cover member **200F** and the second cover member **200R** are secured to each other while being away from each other by a certain interval by a spacer **80,** and define a gas layer **GL** in the sealed space.

### INDUSTRIAL APPLICABILITY

The illumination device according to the present invention is usable for various applications including windows and walls.

### REFERENCE SIGNS LIST

**10:** light guide layer; **14A:** internal space; **100:** optical member; **10:** light guide member; **200F:** first cover member; **200R:** second cover member; **1000:** illumination device

## Claims

1. An optical member, comprising a light guide member, and at least one cover member, the optical member being configured to output light forward,
wherein the light guide member includes:
a light guide layer having a light receiving surface at which the light output from a light source is received, and
a luminous intensity distribution control structure capable of directing, at least forward, a portion of the light propagated in the light guide layer,
wherein the at least one cover member includes a first cover member disposed forward of the light guide member or a second cover member disposed opposite thereto, that is rearward of the light guide member, and
more than 50% of the light incident on the light guide layer is output forward from the light guide member.

2. The optical member of claim 1, wherein the first cover member and the second cover member each have a reflectance of 25% or lower for visible light incident perpendicularly thereon from the side of the light guide layer.

3. The optical member of claim 1, wherein the first cover member or the second cover member includes a glass plate.

4. The optical member of claim 3, wherein the first cover member further includes a reflection-preventive layer provided on at least one main surface of the glass plate.

5. The optical member of any one of claims 1 through 4, wherein where a light beam having a highest luminous intensity in a luminous intensity distribution of light output forward from the light guide member is a first main light beam and a light beam having a highest luminous intensity in a luminous intensity distribution of light output rearward from the light guide member is a second main light beam, a polar angle **θ1** of the first main light beam with respect to the normal to the light guide layer is smaller than a polar angle **θ2** of the second main light beam with respect to the normal to the light guide layer.

6. The optical member of claim 5, wherein where the polar angle **θ1** is 0° or larger and smaller than 40°, and the polar angle **θ2** is 30° or larger and smaller than 70°.

7. The optical member of any one of claims 1 through 4, wherein the light guide member and the at least one cover member are disposed to be away from each while having a gas layer therebetween.

8. The optical member of any one of claims 1 through 4, wherein the light guide layer is formed of an acrylic resin.

9. The optical member of any one of claims 1 through 4, wherein the luminous intensity distribution control structure includes a plurality of internal spaces each having a forward inclining surface directing light forward by total internal reflection.

10. The optical member of any one of claims 1 through 4, wherein the luminous intensity distribution control structure is formed in a direction conversion layer disposed forward or rearward of the light guide layer.

11. The optical member of any one of claims 1 through 4, wherein the light guide member has a visible light transmittance of 60% or higher and a Haze value of smaller than 10%.

12. An illumination device, comprising:
the optical member of any one of claims 1 through 4; and
a light source disposed so as to output light toward the light receiving surface of the optical member.
